# FASCICULE DE BREVET EUROPEEN

(11) **EP 2 010 548 B1**
(45) Date de publication et mention de la délivrance du brevet: **24.08.2016**
(21) Numéro de dépôt: 07731328.6
(22) Date de dépôt: 20.04.2007
(51) Int. Cl.: C07F 7/08

(54) **PROCEDE DE CONDENSATION DE MOTIFS SILYLES A L'AIDE D'UN CATALYSEUR DE TYPE CARBENE**
VERFAHREN ZUM KONDENSIEREN VON SILYLEINHEITEN MIT EINEM CARBENKATALYSATOR
METHOD FOR CONDENSING SILYL UNITS USING A CARBENE CATALYST

(30) Priorité: 21.04.2006 FR 0603563
(43) Date de publication de la demande: 07.01.2009
(73) Titulaire: Bluestar Silicones France, 69486 Lyon Cedex 03 (FR); Centre National de la Recherche Scientifique, 75794 Paris Cedex 16 (FR)
(72) Inventeur: BACEIREDO, Antoine, 31500 Toulouse (FR); FLEURY, Etienne, 69340 Irigny (FR); KATO, Tsuyoshi, 31400 Toulouse (FR); MARROT, Sébastien, 31000 Toulouse (FR); SAINT-JALMES, Laurent, 69390 Vourles (FR)
(86) Numéro de dépôt international: PCT/FR2007/000665
(87) Numéro de publication internationale: WO 2007/122325

(56) Documents cités:
- FR-A1- 2 864 543

## Description

Le domaine de la présente invention est celui des procédés de condensation ou de polycondensation dans le domaine des silicones.

Il est bien connu que l'on peut polycondenser les silanols, les silanediols, les polysiloxanediols en présence de composés variés qui accélèrent la polycondensation en jouant le rôle d'agent de déshydratation ou de catalyseur (cf. par exemple le traité de Walter NOLL: Chemistry and Technology of Silicones; édition 1968 p. 211 à 218).

Parmi les agents de déshydratation, on peut citer d'une part, les composés acides tels que les acides sulfurique et phosphorique, les chlorures d'acides et d'autre part, des composés non acides tels que les isocyanates, les esters boriques... Tous ces composés doivent être utilisés en proportion stoechiométrique.

Parmi les catalyseurs, on peut citer les acides halogénés, les catalyseurs basiques tels que les hydroxydes alcalins, et les amines telles que la triéthylamine. Enfin, on peut également activer la réaction de polycondensation en utilisant des composés organométalliques de métaux tels que le plomb, l'étain, le zirconium, l'aluminium, le calcium, le sodium, le potassium.

Ces divers catalyseurs sont en outre réputés favoriser également la réaction d'équilibrage des liaisons siloxaniques par ouverture de ces dernières avec polymérisation ultérieure des liaisons ainsi libérées et de ce fait formation de composés cycliques volatils (Journal of Polymer Science, 59, 259-269,1962).

Les procédés de condensation dans le domaine des silicones peuvent aussi faire intervenir, d'une part, des polydiorganosiloxanes α,ω- dihydroxylés et, d'autre part, des composés siliciés du type di-, tri- ou tétraalcoxysilanes. Dans ce type de réaction de condensation, la littérature technique antérieure regorge d'exemples de catalyseurs, que l'on dénomme aussi catalyseurs de fonctionnalisation. On peut mentionner de façon non limitative: les amines, les oxydes inorganiques, les dérivés organiques de titane, les combinaisons titane/amine, les hydroxylamines, les chélates d'aluminium, les carbamates, et les oximes.

Tous ces catalyseurs connus souffrent d'inconvénients rédhibitoires. En particulier, les amines induisent de faibles cinétiques réactionnelles, même avec des alcoxysilanes très réactifs comme les alcoxysilanes de formule ViSi(OCH₃)₃ avec Vi= groupement vinyle. De plus les amines ont une odeur désagréable et sont toxiques. Elles polluent le milieu réactionnel et déstabilisent les produits finis.

Les catalyseurs à base de titane et de groupements hydrocarbonés, tels que le tétra-isopropoxytitane, ont pour effet néfaste d'entraîner une gélification du milieu, particulièrement gênante à un stade industriel.

On connaît également les catalyseurs de fonctionnalisation du type acétate de potassium (brevet US 3 504 051) ou de sodium (brevet US 3 563 241); de même que des mélanges acide carboxylique amine, comme enseigné par le brevet FR 2 604 713. De tels catalyseurs souffrent d'être relativement corrosifs et donc délicats à manipuler. En outre, ils ne permettent pas d'améliorer de manière significative les cinétiques de réticulation.

Le brevet US 5 026 811 décrit la réticulation de résines silicones du type polyméthylphénylsiloxane par mise en oeuvre d'un catalyseur organométallique constitué par un mélange de carboxylates de métal alcalin, d'un carbonate ou d'un bicarbonate de métal alcalin, et éventuellement d'un carboxylate d'ammonium. Le métal alcalin sélectionné peut être, par exemple, le lithium et les carboxylates, des acétates ou des 2-éthylhexanoates. Ces mélanges catalytiques présentent l'inconvénient de ne pas être directement solubles en milieu silicone et de donner lieu à des résidus difficiles à éliminer.

Plus récemment, il a été proposé des catalyseurs de fonctionnalisation (condensation SiOH/SiOR), formés par des hydroxydes de métaux alcalins tels que le sodium, le potassium (brevets EP 457 693 et US 5 196 497) ou bien encore de lithium (brevet US 5 079 324). Cette nouvelle classe de catalyseurs vise à remplacer les carboxylates, qui apparaissent à l'homme du métier comme étant inappropriés, non performants et défectueux, lorsqu'ils sont employés seuls dans cette application. Malheureusement, ces catalyseurs du type alcali pèchent par leur caractère agressif, qui s'exprime surtout à des températures élevées, par exemple de l'ordre de 100°C. En effet, la forte alcalinité qu'ils génèrent est à l'origine de dégradation sur les réactifs et les produits de la réaction de condensation. Cette basicité complique, en outre, la manipulation du milieu réactionnel. Par ailleurs, ces hydroxydes inorganiques, insolubles dans les silicones, requièrent l'utilisation de solvants polaires qui induisent l'apparition des formes régénérées du métal alcalin concerné. Ces dernières seraient à l'origine d'un phénomène de lyse du polymère et/ou réticulat obtenu (réversion).

C'est ainsi que pour améliorer la catalyse de ce type de réaction de condensation, la demande de brevet européen N° 0 564 253 enseigne la mise en oeuvre d'un catalyseur constitué par un composé organométallique à base de lithium et ne nécessitant pas l'emploi de solvant polaire ou aprotique. Plus précisément, les catalyseurs divulgués sont des silanolates de lithium ou des alkyles lithium tels que le tert ou le n- butyle lithium. Il s'avère que ces catalyseurs connus sont toujours de nature à entraîner, à chaud, des dégradations des réactifs et des produits. Cet enseignement s'inscrit dans le prolongement de la tendance générale de perfectionnement de la catalyse des réactions SiOH/SiOR en abandonnant la voie carboxylate. Force est de constater que les améliorations obtenues restent insatisfaisantes, quant à la stabilité voire à la cinétique obtenues.

Les métaux sont donc de bons catalyseurs de la réaction de condensation, même à température ambiante. Leur efficacité dépend bien évidemment de la température, mais ces conditions peuvent alors favoriser des réactions secondaires de dégradation comme la déméthylation. L'étain, par exemple sous forme de dibutyldilaurate d'étain, est couramment utilisé pour son aptitude à catalyser ces réactions à basses températures, notamment dans le cas de la préparation de réseau. Ce métal présente malheureusement une forte toxicité et devra à terme être remplacé.

Un des axes majeurs dans le domaine des polysiloxanes concerne donc la recherche de catalyseurs alliant à la fois la performance, la spécificité et la non toxicité.

Par ailleurs, des complexes platine/carbène sont connus comme catalyseur d'hydrosilylation de polyorganosiloxane à motifs ≡Si-Vinyle, au moyen de polyorganosiloxane à motifs ≡Si-H. A titre d'exemple, on peut citer la demande PCT WO-A-02/098971 qui décrit une composition silicone réticulable en élastomère par hydrosilylation, en présence de catalyseurs métalliques à base de carbènes. Cette composition comprend :
- un polyorganovinylsiloxane (polydiméthyl)(méthylvinyl)siloxane,
- un polyorganohydrogénosiloxane,
- un catalyseur au platine formé par un complexe (C3) ou (C4) de formules suivantes : 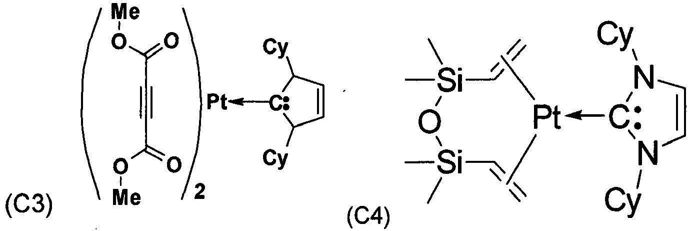
- éventuellement un inhibiteur de réticulation, et
- éventuellement une charge.

L'hydrosilylation n'est ni une réaction de condensation ni de polycondensation. Dans une telle hydrosilylation, le carbène joue seulement le rôle de ligand du platine et ne joue donc pas le rôle de catalyseur. Par ailleurs, les carbènes utiles en tant que ligands de métaux catalytiques, sont aussi exploités dans d'autres domaines que celui des silicones. Ainsi, le brevet EP-B-0 971 941 décrit des catalyseurs à base de complexes ruthénium et osmium/carbène, pour la métathèse thermique de cyclooléfines.

En outre, un article de J.L. Hedrick et al paru en 2002, (JACS 124, n° 6 p 914-915, 2002), enseigne que des carbènes N-hétérocycliques peuvent être utilisés comme catalyseur de polymérisation d'esters cycliques. Plus précisément, le 1,3-bis-(2,4,6-triméthylphényl)imidazol-2-ylidène a été testé comme catalyseur de polymérisation du L-lactide, de l'ε caprolactone et du β-butyrolactone, en présence d'un alcool utilisé comme amorceur. Du point de vue mécanisme, les auteurs pensent que puisque le pKa est très élevé (pKa = 24, mesuré dans le DiMéthylSulfOxyde), le carbène est très nucléophile et peut donc attaquer le monomère ester cyclique pour donner une espèce activée susceptible d'attaquer l'alcool de l'amorceur ou de la chaîne en croissance selon un processus d'initiation/propagation représenté ci-dessous :

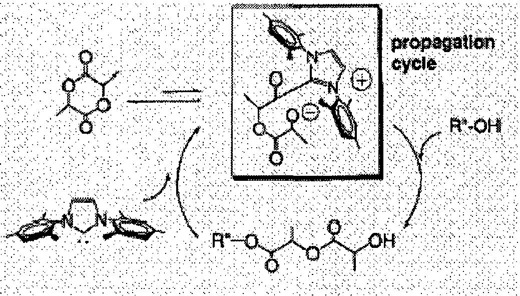

Un article plus récent et plus complet (cf. JACS 125, n° 10 p 3046-3056, 2003) décrit la préparation de carbène in-situ pour éviter les problèmes d'hydrolyse. Les promoteurs utilisés sont de type thiazolium, imidazolium et imidazolinium donnant respectivement des catalyseurs thioazole carbène, imidazole-2-ylidène carbène et imidazolin-2-ylidène carbène, lorsqu'ils sont mis en présence ter-butylate de potassium. Des tests de polymérisation montrent que la première famille de catalyseurs ne permet pas d'obtenir de manière rentable et sélective des hauts poids moléculaires.

Les carbènes obtenus par déprotonation d'un sel d'imidazolium en présence d'une base forte ont récemment été décrits pour la synthèse de silicones polyorganosiloxanes, par polymérisation par ouverture de cycle(s) et/ou redistribution de polyorganosiloxanes linéaires ou cycliques (demande de brevet FR 2864543).

Dans ces circonstances, l'un des objectifs essentiels de la présente invention est de fournir un procédé de condensation SiOH / SiOR entre des composés (organo)siliciés comportant de tels motifs silylés, lequel procédé se devant de mettre en oeuvre des catalyseurs non toxiques.

Un autre objectif de l'invention est de fournir un procédé de condensation dans lequel le catalyseur utilisé ne soit pas corrosif ni agressif vis-à-vis des réactifs et des produits, qui soit économique et qui, enfin, soit performant sur le plan des cinétiques réactionnelles atteintes.

Un autre objectif de l'invention est de fournir un procédé de condensation faisant intervenir un catalyseur, directement et aisément soluble en milieu silicone.

Un autre objectif essentiel de l'invention est de fournir des catalyseurs ayant les spécifications sus-évoqués.

Un autre objectif essentiel de l'invention est de fournir des compositions silicones réticulables, éventuellement en présence d'eau, et qui permettent d'obtenir des élastomères ou des résines, de manière économique, rapide et simple.

Un autre objectif essentiel de l'invention est de fournir des applications des compositions sus-mentionnées comprenant le catalyseur de condensation visé ci-dessus, en tant qu'élément constitutif de mastic, de revêtement anti-adhérent, d'adhésif ou bien encore de liant de matériau composite fibreux ou non.

Ces objectifs et d'autres sont atteints par la présente invention qui concerne l'utilisation d'au moins un catalyseur C qui est un carbène de formule (**II**) ou (**II**') : 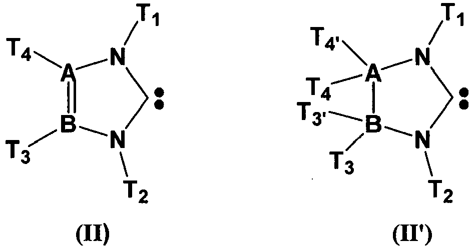 dans laquelle :
- A et B représentent indépendamment C ou N, étant entendu que :
   - dans la formule (II), lorsque A représente N, alors T₄ n'est pas présent et lorsque B représente N, alors T₃ n'est pas présent ;
   - dans la formule (II'), lorsque A représente N, alors T₄ ou T4' n'est pas présent et lorsque B représente N, alors T₃ ou T₃, n'est pas présent ;
- T₃, T_{3'}, T₄ et T_{4'} représentent indépendamment un atome d'hydrogène ; un groupement alkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T₃ et T₄ peuvent former ensemble et avec A et B quand ceux-ci représentent chacun un atome de carbone, un aryle étant entendu que dans ce cas T_{3'} et T_{4'} ne sont pas présent ;
- T₁ et T₂ représentent indépendamment un groupement alkyle ; un groupement alkyle éventuellement substitué par alkyle ; un groupement alkyle perfluoré ou éventuellement substitué par un groupement perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
   T1 et T2 représentent indépendamment un radical monovalent de formule (V) suivante :

   **-V1-V2** (**V**)

   dans laquelle:
   - V1 est un groupement divalent hydrocarboné saturé ou non, de préférence un alkylène linéaire ou ramifié en C₁-C₁₀, éventuellement substitué,
   - V2 est un groupement monovalent choisi dans le groupe des substituants suivants :
      ◆ alcoxy, -OR^{a} avec R^{a} correspondant à hydrogène, alkyle, aryle ;
      ◆ silyl, -Si(OR^{b})ₓ(R^{c})₃₋ₓ avec R^{b} correspondant à hydrogène, alkyle, silyle ou siloxanyle, R^{c} correspondant à alkyle, aryle et x étant un entier compris entre 0 et 3;
      ◆ amine, de préférence -N(R^{a})₂ avec R^{a} correspondant à hydrogène, alkyle, aryle ; ou bien encore ;
- les substituants T₁, T₂, T₃, T_{3'}, T₄ et T_{4'} peuvent former deux à deux, lorsqu'ils sont situés sur deux sommets adjacents dans les formules (II) et (II'), une chaîne hydrocarbonée saturée ou insaturée,
pour effectuer une réaction de condensation entre au moins un motif ≡SiOH et au moins un motif ≡SiOR avec R = un hydrogène ou un groupement hydrocarboné en C₁-C₂₀ comprenant éventuellement un ou plusieurs hétéroatomes, caractérisée en ce que la réaction de condensation est mise en oeuvre entre :
- au moins un composé (organo)silicié **A₁** et au moins un composé (organo)silicié **B,**
- au moins un composé (organo)silicié **A₁** et au moins un composé (organo)silicié **D,** et
- au moins un composé (organo)silicié **A₁** et au moins un composé (organo)silicié **B** et au moins un composé (organo)silicié **D,**
avec:
- le composé (organo)silicié **A₁** de formule 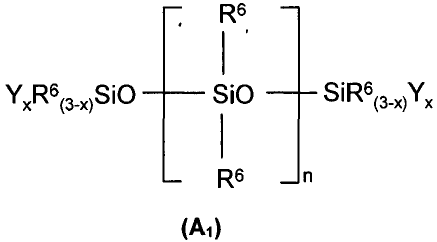 avec :
   - x = 1, 2 ou 3 ;
   - n est un nombre entier supérieur ou égal à 1 et de préférence supérieur ou égal à 10 ;
   - les radicaux R⁶ étant identiques ou différents entre eux et correspondant à l'hydrogène ou à des groupements hydrocarbonés en C₁-C₂₀, de préférence alkyle, cycloalkyle, alcényle, cycloalcényle, (cyclo) alcynyle linéaire ou branché, aryle, aralkyle, alkylaryle,
   - Y représente des groupes -OR', identiques ou différents, avec R' ayant la même définition que R⁶, telle qu'énoncée ci-dessus
   - au moins une partie des radicaux R⁶ pouvant éventuellement correspondre à Y, et
   - au moins deux groupements Y sont présents dans la structure du polyorganosiloxane **A₁.**
- le composé (organo)silicié **B** étant un silane de formule générale **(B)** suivante :

   R⁷₄₋ₐ Si Y'ₐ **(B)**

   dans laquelle:
   - R⁷ étant identiques ou différents entre eux et correspondant à l'hydrogène ou à des groupements hydrocarbonés en C₁-C₁₂, de préférence alkyle, cycloalkyle, alcényle, cycloalcényle, (cyclo) alcynyle linéaire ou branché, aryle, aralkyle, alkylaryle,
   - Y' représente des groupes -OR', identiques ou différents, avec R' ayant la même définition que R⁷, telle qu'énoncée ci-dessus et peut correspondre en outre à des groupements hydrocarbonés en C₁-C₂₀ comprenant éventuellement un ou plusieurs hétéroatomes, et en particulier comportant :
      - un reste oxime de formule :

         (R⁸)₂C=N-O-

         avec R⁸ représentant indépendamment, un alkyle linéaire ou ramifié en C₁ à C₈ un cycloalkyle en C₃ à C₈, un alcényle en C₂-C₈,
      - un reste alcoxy de formule :

         OR⁹(CH₂CH₂O)_{b}-

         avec R⁹ représentant indépendamment, un alkyle linéaire ou ramifié en C₁ à C₈ un cycloalkyle en C₃ à C₈ et b = 0 ou 1;
      - un reste acyle de formule : 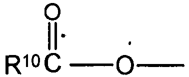 avec R¹⁰ représentant un radical monovalent hydrocarboné saturé ou non en C₁ à C₁₃, ramifié ou non, substitué ou non substitué, aliphatique, cyclanique ou aromatique, ou
      - un reste énoxy de formule :

         R¹¹R¹¹C=CR¹¹-O-

         avec les R¹¹, identiques ou différents, représentant un hydrogène ou un radical monovalent hydrocarboné saturé ou non en C₁ à C₁₃, ramifié ou non, substitué ou non substitué, aliphatique, cyclanique ou aromatique, et
   - a est égal à 3 ou 4, et
- le composé (organo)silicié D étant une résine polyorganosiloxane fonctionnalisée par au moins un radical Y', tel que défini ci-dessus, présentant, dans sa structure, au moins deux motifs siloxyles différents choisis parmi ceux de formules (R¹²)₃SiO_{1/2} (motif M), (R¹²)₂SiO_{2/2} (motif D), R¹²SiO_{3/2} (motif T) et SiO_{4/2} (motif Q), l'un au moins de ces motifs étant un motif T ou Q, les radicaux R¹² identiques ou différents, représentent chacun un radical monovalent hydrocarboné saturé ou non en C₁ à C₁₃, substitué ou non substitué, aliphatique, cyclanique ou aromatique.

Par alkyle, on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone. Des exemples de groupements alkyles sont notamment méthyle, éthyle, isopropyle, n-propyle, tert-butyle, isobutyle, n-butyle, n-pentyle, isoamyle et 1,1-diméthylpropyle. La partie alkyle du groupement alcoxy est telle que définie ci-dessus. Le groupement alkyle perfluoré ou éventuellement substitué par un groupement perfluoroalkyle correspond, de préférence, à la formule :

**-(CH₂)ₚ-C_{q}F_{2q+1}**

dans laquelle p représente 0, 1, 2, 3 ou 4 ; q est un nombre entier de 1 à 10 ; et CqF_{2q+1} est linéaire ou ramifié. Des exemples préférés de ce groupement sont : —(CH₂)₂-(CF₂)₅-CF₃ et -(CF₂)₇-CF₃.

L'expression aryle désigne un groupement hydrocarboné aromatique, ayant de 6 à 18 atomes de carbone, monocyclique ou polycyclique et de préférence monocyclique ou bicyclique. Il doit être entendu que, dans le cadre de l'invention, par groupement aromatique polycyclique, on entend un groupement présentant deux ou plusieurs noyaux aromatiques, condensés (orthocondensés ou ortho et péricondensés) les uns aux autres, c'est-à-dire présentant, deux à deux, au moins deux carbones en commun. Ledit groupement hydrocarboné aromatique ("aryle") est éventuellement substitué par exemple par un ou plusieurs alkyles en C₁-C₃, un ou plusieurs groupements hydrocarbonés halogénés (e.g. CF₃), un ou plusieurs alcoxy (e.g. CH₃O) ou un ou plusieurs groupements hydrocarbonés comprenant un ou plusieurs motifs cétone (e.g. CH₃CO-). A titre d'exemple d'aryle, on peut mentionner les radicaux phényle, naphtyle, anthryle et phénanthryle.

L'expression arylalkyle désigne un groupement alkyle tel que défini ci-dessus, substitué par un ou plusieurs groupements aryle sur sa chaîne hydrocarbonée, le groupement aryle étant tel que défini ci-dessus. Des exemples en sont benzyle et triphénylméthyle.

Par cycloalkyle, on entend un groupement hydrocarboné saturé mono- ou polycyclique, de préférence mono- ou bicyclique, présentant préférablement de 3 à 10 atomes de carbone, mieux encore de 3 à 8. Par groupement hydrocarboné saturé polycyclique, on entend un groupement présentant deux ou plusieurs noyaux cycliques rattachés les uns aux autres par des liaisons σ ou/et condensés deux à deux. Des exemples de groupements cycloalkyle polycycliques sont adamantane et norbornane. Des exemples de groupements cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupement alcényle présente de 2 à 8 atomes de carbone, mieux encore de 2 à 6. Des exemples préférés de groupements alcényle sont les groupements allyle et homoallyle.

Par alcynyle, on entend selon l'invention, une chaîne hydrocarbonée insaturée, linéaire ou ramifiée, substituée ou non, présentant au moins une triple liaison acétylénique, et plus préférablement une seule triple liaison. De préférence, le groupement alcynyle présente de 2 à 8 atomes de carbone, mieux encore de 2 à 6 atomes de carbone. A titre d'exemple, on peut citer le groupement acétylényle, ainsi que le groupement propargyle.

Par silyle, on entend selon l'invention, un groupement linéaire ou ramifié contenant au moins un atome de silicium. Les chaînes polydiméthylsiloxane sont des exemples de groupements silyle.

Les carbènes de formule **(II)** et **(II')** peuvent présenter au moins deux noyaux condensés, c'est-à-dire que deux groupements au moins parmi T₁, T₂, T₃, T_{3'}, T₄ et T_{4'} situés sur deux sommets adjacents, forment ensemble une chaîne hydrocarbonée saturée ou insaturée, présentant de préférence de 3 à 6 atomes de carbones. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique. Concernant les formes préférées de réalisation dans les formules **(II)** ou (**II'**), ce sont des formes dans lesquelles A = B = atome de carbone dans la formule (**II**) donnée supra.

Des significations préférées pour T₁ et T₂ dans cette formule (**II**) sont :
- alkyle, en particulier n-propyle, n-pentyle, néo-pentyle (-CH₂-C(CH₃)₃) ;
- cycloalkyle, en particulier cyclopentyle, cyclohexyle ou adamantyle ;
- alcényle, en particulier allyle (-CH₂-CH=CH₂), méthallyle (-CH₂-C(CH₃)=CH₂) ;
- alcynyle, en particulier propargyle, homopropargyle (-(CH₂)₂-C≡CH) ; ou
- un groupement monovalent (**V**) défini supra, en particulier :

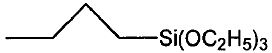

Toujours dans la formule (**II**) et de préférence, T₃ et T₄ correspondent tous deux à l'hydrogène ou forment ensemble un aryle, et mieux encore un phényle.

A titre d'exemples de carbènes, on peut citer ceux décrits dans le tableau 2, page 48 de la publication "Bourissou et al. Chem. Rev. 2000, 100, 39-91". Ce tableau 2, page 48, est inclus par référence dans le présent exposé.

Conformément à l'invention, le (ou les) carbène(s) :
- est (sont) préparé(s) séparément,
- et/ou est (sont) généré(s) in-situ à partir d'au moins un précurseur.

Avantageusement, le (ou les) précurseur(s) est (sont) un sel(s) correspondant(s) au(x) carbène(s), qui est (sont) mis à réagir avec au moins une base, de manière à générer in-situ le (ou les) carbène(s).

Ainsi, pour les carbènes préférés de formule **(II)** et (**II**') le (ou les) sel(s) correspondant(s) est (sont) un (ou des) sel(s) hétérocyclique(s) correspondant(s) de formule générale (**III**) ou (**III**') : 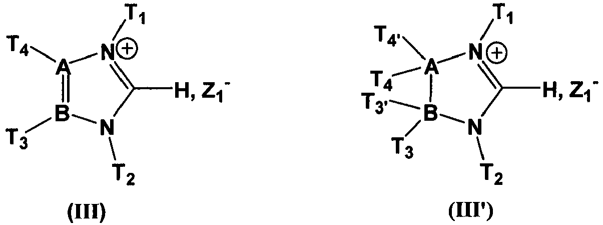 dans laquelle :
- A, B, T₁, T₂, T₃, T_{3'}, T₄ et T_{4'} sont tels que définis ci-dessus ;
- Z₁ représente indépendamment un anion dérivé d'un acide de Brönsted (acide protique) de préférence choisi dans le groupe comprenant :
   - les acides carboxyliques de formule Gₒ-COOH dans laquelle Gₒ représente un alkyle, et avantageusement un alkyle en C1-C22 ; un aryle, avantageusement un aryle en C6-C18 éventuellement substitué par un ou plusieurs alkyle en C1-C6 ;
   - les acides sulfoniques de formule Gₒ-SO₃H dans laquelle Gₒ est tel que défini ci-dessus ;
   - les acides phosphoriques de formule Gₒ-PO₃H dans laquelle Gₒ est tel que défini ci-dessus ;
   - les acides minéraux suivants : HF, HCl, HBr, HI, H₂SO₄, H₃PO₄, HClO₄ et HBF₄ pris à eux seuls ou en combinaison entre eux ;
   - et leurs mélanges.

Concernant le sel **(III),** l'anion Z₁⁻ est l'anion dérivé d'un acide de Brönsted (acide protique) organique ou minéral. Habituellement, l'anion Z₁⁻ est dérivé d'un acide présentant un pKa inférieur à 6. De préférence, Z₁⁻ dérive d'un acide de pKa inférieur à 4, mieux encore inférieur à 2. Les pKa dont il est question ici sont les pKa des acides tels que mesurés dans l'eau. Des exemples d'acides sont les acides carboxyliques de formule :

Gₒ-COOH,

dans laquelle Gₒ représente alkyle, et par exemple (C₁-C₂₂)alkyle ; ou bien aryle, et par exemple (C₆-C₁₈)aryle éventuellement substitué par un ou plusieurs alkyle, de préférence un ou plusieurs (C₁-C₆)alkyle ; les acides sulfoniques de formule : Gₒ-SO₃H, dans laquelle Gₒ est tel que défini ci-dessus ; et les acides phosphoniques de formule : Gₒ-PO₃H dans laquelle Gₒ est tel que défini ci-dessus ; d'autres acides sont HF, HCl, HBr, HI, H₂SO₄, H₃PO₄, HClO₄ et HBF₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

Selon l'invention, on préfère plus particulièrement les anions Z₁⁻ dérivés des acides HCl, HI et HBF₄ et HPF₆.

Ainsi, des anions Z₁⁻ particulièrement préférés, selon l'invention, sont les anions halogénure et le tétrafluoroborate et hexafluorophosphate.

On donne ci-dessous quelques exemples de sels d'imidazolium.

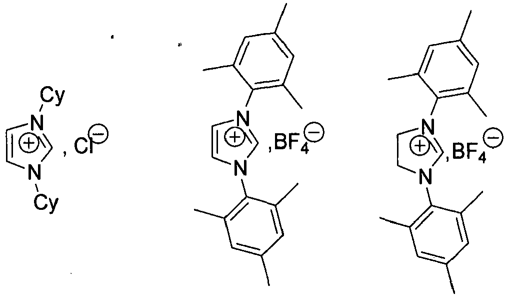

Ces consommables sont soit disponibles dans le commerce, soit facilement préparés par l'homme du métier à partir de composés commerciaux.

Une méthode de synthèse des sels de formule **(III)** dans laquelle A = B = C est décrite dans US-B-5 077 414. Ce procédé comprend la réaction :
=>d'un composé α-dicarbonylé de formule (X) suivante : 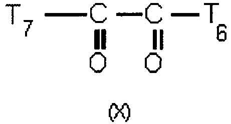 dans laquelle T₆ et T₇ représentent, indépendamment l'un de l'autre, un hydrogène ou un groupement hydrocarboné éventuellement substitué ;
=>avec HCHO et deux amines de formules T₇-NH₂ et T₈-NH₂, en présence d'un acide approprié avec T₇ et T₈ représentant, indépendamment l'un de l'autre, un un groupement hydrocarboné éventuellement substitué.

La nature de l'anion Z₁ dans les sels de formule (**III**) dépend de l'acide utilisé à cette étape. Les acides utilisables sont par exemple ceux énumérés ci-dessus et ceux dont dérive Z1. D'autres méthodes de préparation des sels de formule **(III)** sont proposées dans Chem. Eur. J. 1996, 2, n° 12, pages 1627-1636 et Angew. Chem. Int. Ed. Engl. 1997, 36, 2162-2187.

Les carbènes selon l'invention peuvent aussi être générés in-situ par activation thermique d'un précurseur préparé par condensation d'une diamine et d'un aldéhyde via une catalyse acide. Ce type de précurseur, appelé carbène N-hétérocyclique, ou NHC, est décrit dans Chem. Eur. J. 2004, 10, pages 4073-4079. En particulier, les précurseurs de carbènes décrits dans le tableau 1, page 4076 sont inclus par référence dans le présent exposé.

Suivant une méthodologie préférée, l'utilisation est mis en oeuvre, en catalyse homogène, dans un milieu réactionnel liquide dans lequel sont au moins partiellement solubilisés le catalyseur **C** à base de carbène(s) et/ou son (ou ses) précurseur(s) et les composés (organo)siliciés **P,** et éventuellement au moins une base.

Avantageusement, on contrôle la solubilité du catalyseur **C** à base de carbène(s) et/ou de son (ou ses) précurseur(s), à l'aide d'au moins un auxiliaire de solubilisation et/ou en utilisant un (ou des) carbène(s) substitué(s) par au moins un groupement approprié.

A titre d'exemples d'auxiliaires de solubilisation, on peut citer les solvants tels que le TétraHydroFurane (THF), le toluène, etc. A titre d'exemples de groupements de solubilisation, on peut citer les alkyles, les aryles, les groupements fluorés, les silyles, les siloxanes tels que les chaînes PolyDiMéthylSiloxane, etc.

Ces groupements peuvent appartenir aux formules **(I°), (I), (I'), (II), (II'), (III), (III')** définies ci-dessus.

L'un des avantages surprenants des carbènes judicieusement sélectionnés conformément à l'invention, tient à la possibilité de réaction rapide à basse température. Ainsi, l'utilisation est caractérisé en ce que la réaction de condensation ou de polycondensation est réalisée à une température T (°C) telle que :

| | |
|---|---|
| | T ≤ 200 |
| de préférence | 100 ≤ T ≤ 150 |
| et plus préférentiellement encore | T ≤ 100. |

En pratique, il peut s'agir de la température ambiante, qui est particulièrement économique et facile à mettre en oeuvre, sur le plan industriel. Mais, pour diminuer la viscosité de la phase silicone, il est tout aussi possible de travailler à plus haute température. L'utilisation selon l'invention offre beaucoup de flexibilité à cet égard.

Sur le plan quantitatif, la concentration en catalyseur **C** (en moles pour 100 g de composé (organo)silicié **P** de départ, dans le milieu réactionnel est telle que :

| | |
|---|---|
| | [C] ≤ 1 |
| de préférence | 10⁻⁵ ≤ [C] ≤ 10⁻¹ |
| et plus préférentiellement encore | 10⁻⁵ ≤ [C] ≤ 10⁻³. |

Selon un mode préféré de l'invention, le composé (organo)silicié **P** est un polyorganosiloxane **A** dont au moins une des extrémités silicium comprend au moins un hydroxyle ou un radical hydrolysable ou condensable, ledit polyorganosiloxane répondant de préférence à la formule **(A₁)** suivante : 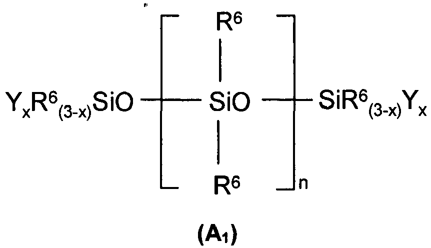 avec :
- x = 1, 2 ou 3 ;
- n est un nombre entier supérieur ou égal à 1 et de préférence supérieur ou égal à 10 ;
- les radicaux R⁶ étant identiques ou différents entre eux et correspondant à l'hydrogène ou à des groupements hydrocarbonés en C₁-C₂₀, de préférence alkyle, cycloalkyle, alcényle, cycloalcényle, (cyclo) alcynyle linéaire ou branché, aryle, aralkyle, alkylaryle, et éventuellement substitué, avantageusement par un ou plusieurs halogènes, les radicaux méthyle, éthyle, propyle, butyle étant plus particulièrement préférés ;
- Y représente des groupes, identiques ou différents, hydrolysables ou condensables ou bien encore hydroxyles et de préférence un groupe -OR' avec R' ayant la même définition que R⁶, telle qu'énoncée ci-dessus et peut correspondre en outre à des groupements hydrocarbonés en C₁-C₂₀ comprenant éventuellement un ou plusieurs hétéroatomes, et en particulier comportant des motifs oxime, énoxy éther ou polyéther;
- au moins une partie des radicaux R⁶ pouvant éventuellement correspondre à Y, et
- au moins deux groupements Y sont présents dans la structure du polyorganosiloxane **A.**

La viscosité de huiles de formule **(A₁)** est généralement comprise entre 10 et 10⁶ mPa.s à 25°C. Comme exemple de radicaux R⁶ on peut citer les radicaux alkyle ayant de 1 à 8 atomes de carbone tels que méthyle, éthyle, propyle, butyle, héxyle et octyle, les radicaux vinyle, les radicaux phényle. Comme exemples de radicaux R⁶ substitués, on peut citer les radicaux trifluoro-3,3,3 propyle, chlorophényle et β- cyanoéthyle.

Dans les produits de formule **(A₁)** généralement utilisés industriellement, au moins 60 % en nombre des radicaux R⁶ sont des radicaux méthyle, les autres radicaux étant généralement des radicaux phényle et/ou vinyle.

Comme exemples de groupes Y hydrolysables, on peut citer les groupes hydroxyles, aminoxy, cétiminoxy, iminoxy, alcoxy, alcoxy-alkylène-oxy.

Comme groupes Y alcoxy on peut citer les groupes ayant de 1 à 8 atomes de carbone comme les groupes méthoxy, éthoxy, propoxy, isopropoxy, butoxy, hexyloxy et octyloxy, comme groupe Y alcoxy-alkylène-oxy on peut citer le groupe méthoxy-éthylène-oxy.

Selon une caractéristique intéressante de l'invention, R⁶ peut comprendre au moins une fonction réactive de polymérisation et/ou réticulation, avantageusement constituée par une unité insaturée, de préférence éthyléniquement insaturée (e.g. vinylique, (méth)acrylique), ou époxydée (e.g. : β-3,4-époxycyclohexyléthyle ou le glycidoxypropyle). La réactivité aussi apportée, peut donner naissance à une fonctionnalisation ou réticulation autre que celle par condensation et qui peut, par exemple, être photo et/ou thermoactivée, en présence ou non d'amorceurs de réticulation.

A titre d'exemples de tels polyorganosiloxane **A**, on peut mentionner les organopolyorganosiloxanes α-ω-dihydroxylés de formule **(A₁)**. Ce sont généralement des huiles dont la viscosité à 25 °C varie de 500 mPa.s à 500 000 mPa.s, de préférence 800 mPa.s à 400 000 mPa.s. Ce sont des polymères linéaires constitués essentiellement de motifs diorganosiloxyles de formule (R⁶)₂SiO_{2/2} et terminés par des motifs de structure (R⁶)₃SiO_{1/2}. Toutefois, la présence d'autres motifs présents généralement à titre d'impuretés tels que R⁶SiO_{3/2}, et SiO_{4/2} n'est pas exclue dans la proportion d'au plus 1% par rapport au nombre de motifs diorganosiloxyles.

En pratique, les radicaux organiques liés aux atomes de silicium des huiles de base est représenté par les symboles R⁶, peuvent être avantageusement choisis parmi les radicaux alkyles ayant de 1 à 3 atomes de carbone tels que les radicaux méthyle, éthyle, n-propyle, le radical vinyle, le radical phényle, le radical trifluoro-3,3,3-propyle et le radical β cyanoéthyle. De préférence, au moins 60 % de l'ensemble des radicaux R⁶ sont des radicaux méthyles, au plus 1 % sont des radicaux vinyles.

A titre illustratif de motif représenté par la formule (R⁶)₂SiO_{2/2}, on peut citer ceux de formule : (CH₃)₂SiO_{2/2} ; (CH₃)(CH₂=CH)SiO_{2/2} et CH₃(C₆ H₅)SiO_{2/2}.

Ces huiles de base sont dans leur grande majorité commercialisées par les fabricants de silicone. Par ailleurs, leurs techniques de fabrication sont bien connues, on les trouve par exemple décrites dans les brevets français FR-A-1 134 005, FR-A-1 198 749, FR-A-1 226 745.

Comme autres exemples de composé (organo)silicié **P,** on peut citer les polyorganosiloxanes de structure cyclique comprenant de 3 à 15 motifs siloxaniques de préférence, de 3 à 6, l'un au moins desdits motifs étant porteurs d'au moins une fonctionnalité Y telle que définie ci-dessus.

Selon une alternative, le composé composé (organo)silicié **P** peut être constitué par un polymère **A₂** formé par un squelette linéaire ou cyclique hydrocarboné comprenant au moins un motif silyle ou siloxyle (R⁶₃₋ₓ)(Yₓ)SiO, avec x = 1, 2 ou 3 et
- R⁶ et Y sont tels que définis ci-dessus.

Dans le cas où **A₂** est linéaire, il comprend avantageusement un tel motif silyle ou siloxyle à au moins l'une de ses extrémités, de préférence aux deux. Le squelette hydrocarboné linéaire peut, par exemple, être un (co)polymère, de préférence, du type polyuréthanne, polyamide, polyéther...

Selon un autre mode préféré de l'invention, le composé (organo)silicié **P** est un composé silicié **B** qui est un silane de formule générale **(B)** suivante :

R⁷₄₋ₐ Si Y'ₐ **(B)**

dans laquelle:
- R⁷ étant identiques ou différents entre eux et correspondant à l'hydrogène ou à des groupements hydrocarbonés en C₁-C₁₂, de préférence alkyle, cycloalkyle, alcényle, cycloalcényle, (cyclo) alcynyle linéaire ou branché, aryle, aralkyle, alkylaryle, et éventuellement substitué, avantageusement par un ou plusieurs halogènes, les radicaux méthyle, éthyle, propyle, butyle étant plus particulièrement préférés ;
- Y' représente des groupes, identiques ou différents, hydrolysables ou condensables ou bien encore hydroxyles et de préférence un groupe -OR' avec R' ayant la même définition que R⁷, telle qu'énoncée ci-dessus et peut correspondre en outre à des groupements hydrocarbonés en C₁-C₂₀ comprenant éventuellement un ou plusieurs hétéroatomes, et en particulier comportant :
   - un reste oxime de formule :

      (R⁸)₂C=N-O-

      avec R⁸ représentant indépendamment, un alkyle linéaire ou ramifié en C₁ à C₈ un cycloalkyle en C₃ à C₈, un alcényle en C₂-C₈,
   - un reste alcoxy de formule :

      OR⁹(CH₂CH₂O)_{b} -

      avec R⁹ représentant indépendamment, un alkyle linéaire ou ramifié en C₁ à C₈ un cycloalkyle en C₃ à C₈ et b = 0 ou 1;
   - un reste acyle de formule : 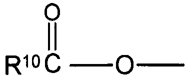 avec R¹⁰ représentant un radical monovalent hydrocarboné saturé ou non en C₁ à C₁₃, ramifié ou non, substitué ou non substitué, aliphatique, cyclanique ou aromatique, ou
   - un reste énoxy de formule :

      R¹¹R¹¹C=CR¹¹-O-

      avec les R¹¹, identiques ou différents, représentant un hydrogène ou un radical monovalent hydrocarboné saturé ou non en C₁ à C₁₃, ramifié ou non, substitué ou non substitué, aliphatique, cyclanique ou aromatique, et
- a est égal à 3 ou 4.

Comme exemple de composé silicié **B,** on peut citer plus particulièrement les polyacyloxysilanes, les polyalcoxysilanes, les polycétiminoxysilanes et les polyiminoxysilanes et en particulier les silanes suivants :
- CH₃Si[ON=C(CH₂)(C₂H₅)]₃ ; CH₂=CH-Si[ON=C(CH₃)(C₂H₅)]₃ ;
- CH₃Si(ON=CH-CH₃)₂
- Si(OCH₃)₄
- Si(OCH₂CH₃)₄
- Si(OCH₂CH₂CH₃)₄
- (CH₃O)₃SiCH₃
- (C₂H₅O)₃SiCH₃
- (CH₃O)₃SiCH=CH₂
- (C₂H₅o)₃SiCH=CH₂
- (CH₃O)₃SiCH₂-CH=CH₂
- (CH₃O)₃Si[CH₂-(CH₃)C=CH₂]
- (C₂H₅O)₃Si(OCH₃)
- Si(OCH₂-CH₂-OCH₃)₄
- CH₃Si(OCH₂-CH₂-OCH₃)₃
- CH₂=CHSi(OCH₂CH₂OCH₃)₃
- C₆H₅Si(OCH₃)₃
- C₆H₅Si(OCH₂-CH₂-OCH₃)₃
- H-Si(OCH₃)₃ et HSi(OC₂H₅)₃
- (CH₃O)₃Si-[-(CH₂)₂-CH₂Cl]
- (CH₃O)₃Si-[-(CH₂)₃-OOC-(CH₃-)C=CH₂]
- (C₂H₅O)₃ Si-(CH₂)₂-CH₃Cl
- (CH₃O)₃Si-(CH₂)₃-NH₂
- (C₂H₅O)₃Si-(CH₂)₃-NH₂
- (CH₃O)₃Si-(CH₂)₃-NH-(CH₂)₂-NH₂
- (C₂H₅O)₃Si-(CH₂)₃-NH-(CH₂)₂-NH₂
- (CH₃O)₃ Si-(CH₂)₃-SH
- (CH₃)(CH₂=CH)Si(OCH₃)₂; et
- leurs mélanges.

Les silanes plus particulièrement préférés sont les suivants :
- Si(OC₂H₅)₄, CH₃Si(OCH₃)₃, CH₃Si(OC₂H₅)₃,
- (C₂H₅O)₃Si(OCH₃), CH₂=CH-Si(OCH₃)₃,
- CH₃(CH₂=CH)Si(OCH₃)₂, CH₂=CH-Si(OC₂H₅)₃ ;et
- leurs mélanges.

Selon une autre variante de l'invention, le composé (organo)silicié **P** est une résine polyorganosiloxane **D,** fonctionnalisée par au moins un radical Y', tel que défini ci-dessus présentant, dans sa structure, au moins deux motifs siloxyles différents choisis parmi ceux de formules (R¹²)₃SiO_{1/2} (motif M), (R¹²)2SiO_{2/2} (motif D), R¹²SiO_{3/2} (motif T) et SiO_{4/2} (motif Q), l'un au moins de ces motifs étant un motif T ou Q, les radicaux R¹² identiques ou différents, représentent chacun un radical monovalent hydrocarboné saturé ou non en C₁ à C₁₃, substitué ou non substitué, aliphatique, cyclanique ou aromatique.

Ces résines silicones sont des polymères polyorganosiloxanes ramifiés bien connus dont les procédés de préparation sont décrits dans de nombreux brevets. Comme exemples concrets de résines utilisables, on peut citer les résines MQ, MDQ, TD et MDT fonctionnalisées par des groupements Y' tels que définis ci-dessus.

De manière plus préférentielle, comme exemples de résines utilisables, on peut citer les résines TD et MDT fonctionnalisées comprenant au moins 20 % en poids de motifs T et ayant une teneur pondérale en groupement Y' allant de 0,3 à 5 %. De manière encore plus préférentielle, on utilise des résines de ce type, dans la structure desquelles au moins 80 % en nombre des substituants R¹² sont des radicaux méthyle. Les groupements fonctionnels Y' des résines peuvent être portés par les motifs M, D et/ou T.

Selon une autre variante préférée de l'invention, la réaction de condensation est mise en oeuvre entre au moins un composé silicié **A** et/ou **B** et/ou **D** tel que défini ci-dessus.

Un autre objet de l'invention concerne l'utilisation dans un procédé de condensation tel que décrit ci-dessus d'une composition silicone réticulable, éventuellement en présence d'eau, caractérisée en ce qu'elle comprend :
- au moins un composé silicié **A** et/ou **B** et/ou **D** tel que défini ci-dessus, et
- au moins un catalyseur **C** tel que défini ci-dessus.

Outre cette distinction selon leurs constituants, il est également possible de diviser en deux grandes familles les compositions silicones de l'invention.

La première famille est constituée par les systèmes monocomposant ou à un seul emballage stable au stockage à l'abri de l'humidité de l'air. Dans ce cas, le durcissement en élastomère s'effectue par une activation thermique du précurseur de carbène, par exemple (NHC) tel que décrit ci-dessus.

La deuxième famille est constituée par des systèmes à plusieurs composants ou à plusieurs emballages, de préférence 2, dans lesquelles le catalyseur C est séparé des espèces susceptibles de réticuler.

Il est à noter que les compositions ou les systèmes selon l'invention peuvent comporter des charges et/ou des plastifiants, ayant de préférence un caractère neutre ou légèrement basique et qui n'ont pas d'impact néfaste sur le catalyseur **C.**

Les charges envisageables sont des charges renforçantes ou semi- renforçantes ou de bourrage. Elles sont de préférence choisies parmi les charges siliceuses, neutres ou basique du type silices de terre de diatomées ou parmi les carbonates. Ces silices ont une surface spécifique, mesurée selon les méthodes BET, d'au moins 50 m² / g, de préférence supérieure à 70 m²/g, une dimension moyenne des particules primaires inférieure à 0,1 µm (micromètre) et une densité apparente inférieure à 200 g/litre.

Ces silices peuvent être incorporées, de préférence telles quelles, ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysiloxanes tels que l'hexaméthylsilazane, l'hexaméthylcyclotrisilazane, des chlorosilanes tels que le diméthyldichlorosilane, le triméthylchlorosilane, le méthyvinyldichlorosilane, le diméthylvinylchlorosilane, des alcoxysilanes tels que le diméthyldiméthoxysilane, le diméthylvinyléthoxysilane, le triméthylméthoxysilane. Les bases de compositions de silicone définies de façon générale ci- dessus sont bien connues de l'homme de métier. Elles sont décrites en détail dans la littérature en particulier dans de nombreux brevets et la plupart sont disponibles dans le commerce.

Un autre objet de l'invention concerne aussi l'utilisation de la composition décrite ci-dessus ou du système d'élastomères silicones réticulables décrit ci-dessus:
- pour la réalisation de revêtements, notamment antiadhérent, de supports solides, de nature variée, avantageusement en pierre, béton, métal, bois, verre, céramique, papier, carton; - pour l'enduction de matériau fibreux tissés ou non,
- à titre de liant, notamment hydrofuge, pour matériaux composites fibreux ou non, lesdites éventuelles fibres étant minérales ou non, ou
- à titre de mastic ou de matériau d'étanchéification.

Les exemples qui suivent permettront de mieux appréhender l'utilisation et le catalyseur selon l'invention, en faisant ressortir tous leurs avantages et les variantes possibles de mises en oeuvre.

### EXEMPLES

### Généralités :

Le carbène **C** utilisé est le dicyclohexyldiaminocarbène obtenu par déprotonation à partir du triflate d'imidazolium correspondant : 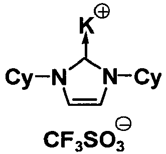 selon le protocole opératoire suivant le mode opératoire suivant :

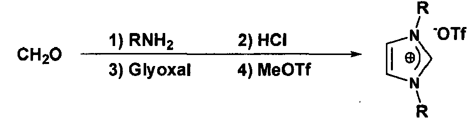

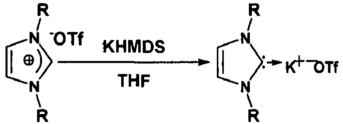

Les autres matières premières sont disponibles commercialement

### Exemple 1

Dans un flacon de 30 mL, sont mélangés :
a) une quantité de 3 mL d'une huile silicone de formule :

   M^{OH}-D₁₀-M^{OH}

   Avec
   M^{OH} = (CH₃)₂(OH)SiO_{1/2}
   D: (CH₃)₂SiO2/2
   cette huile a été dévolatilisée pour éliminer des oligomères cycliques ; et
   - une quantité variable du catalyseur C.

Le mélange est agité et chauffé à 80°C pendant 16h.

Les résultats sont regroupés dans le Tableau 1.

**Tableau 1**

| Essais | 1 | 2 | 3 | 4 |
|---|---|---|---|---|
| MOH-D10-MOH | 3 ml | 3 ml | 3 ml | 3ml |
| Carbène C (ppm) | 0 | 2500 | 5000 | 10000 |
| Mn | 484 | 67236 | 62160 | 48006 |
| Mw | 1029 | 112896 | 109152 | 90932 |
| Polydispersité (Mw/Mn) | 2.12 | 1.67 | 1.75 | 1.89 |
| Conversion (% par RMN) | - | 90.7 | 89.1 | 90.5 |

| | | | | |
|---|---|---|---|---|
| Mn = masse molaire moyenne en nombre Mw = masse molaire moyenne en poids | | | | |

### Discussions:

Cet exemple montre que les catalyseurs de type carbène selon l'invention catalysent la polycondensation des silanols. Ce fait expérimental est nouveau et non décrit dans l'art antérieur.

## Revendications

1. Utilisation d'au moins un catalyseur C qui est un carbène de formule **(II)** ou **(II')** : 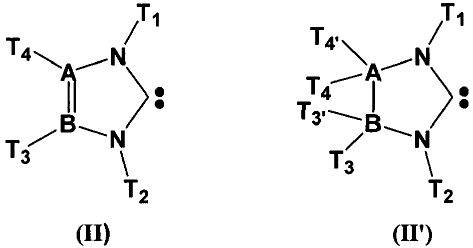 dans laquelle :
- A et B représentent indépendamment C ou N, étant entendu que :
• dans la formule (II), lorsque A représente N, alors T₄ n'est pas présent et lorsque B représente N, alors T₃ n'est pas présent ;
• dans la formule (II'), lorsque A représente N, alors T₄ ou T4' n'est pas présent et lorsque B représente N, alors T₃ ou T_{3'} n'est pas présent ;
- T₃, T_{3'}, T₄ et T_{4'} représentent indépendamment un atome d'hydrogène ; un groupement alkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
- T₃ et T₄ peuvent former ensemble et avec A et B quand ceux-ci représentent chacun un atome de carbone, un aryle étant entendu que dans ce cas T_{3'} et T_{4'} ne sont pas présent ;
- T₁ et T₂ représentent indépendamment un groupement alkyle ; un groupement alkyle éventuellement substitué par alkyle ; un groupement alkyle perfluoré ou éventuellement substitué par un groupement perfluoroalkyle ; cycloalkyle éventuellement substitué par alkyle ou alkoxy ; aryle éventuellement substitué par alkyle ou alkoxy ; alcényle ; alcynyle ; ou arylalkyle dans lequel la partie aryle est éventuellement substituée par alkyle ou alkoxy ; ou bien
T1 et T2 représentent indépendamment un radical monovalent de formule (V) suivante :
**-V1-V2** **(V)**
dans laquelle:
• V1 est un groupement divalent hydrocarboné saturé ou non, de préférence un alkylène linéaire ou ramifié en C₁-C₁₀, éventuellement substitué,
• V2 est un groupement monovalent choisi dans le groupe des substituants suivants :
◆ alcoxy, -OR^{a} avec R^{a} correspondant à hydrogène, alkyle, aryle ;
◆ silyl, -Si(OR^{b})ₓ(R^{c})₃₋ₓ avec R^{b} correspondant à hydrogène, alkyle, silyle ou siloxanyle, R^{c} correspondant à alkyle, aryle et x étant un entier compris entre 0 et 3;
◆ amine, ou bien encore ;
- les substituants T₁, T₂, T₃, T₃, T₄ et T_{4'} peuvent former deux à deux, lorsqu'ils sont situés sur deux sommets adjacents dans les formules (II) et (II'), une chaîne hydrocarbonée saturée ou insaturée,
pour effectuer une réaction de condensation entre au moins un motif ≡SiOH et au moins un motif ≡SiOR avec R = un hydrogène ou un groupement hydrocarboné en C₁-C₂₀ comprenant éventuellement un ou plusieurs hétéroatomes, **caractérisée en ce que** la réaction de condensation est mise en oeuvre entre :
• au moins un composé (organo)silicié **A₁** et au moins un composé (organo)silicié **B,**
• au moins un composé (organo)silicié **A₁** et au moins un composé (organo)silicié **D,** et
• au moins un composé (organo)silicié **A₁** et au moins un composé (organo)silicié **B** et au moins un composé (organo)silicié **D,**
avec:
• le composé (organo)silicié **A₁** de formule 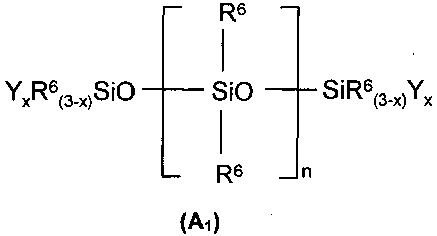 avec :
- x=1,2ou3;
- n est un nombre entier supérieur ou égal à 1;
- les radicaux R⁶ étant identiques ou différents entre eux et correspondant à l'hydrogène ou à des groupements hydrocarbonés en C₁-C₂₀,
- Y représente des groupes -OR', identiques ou différents, avec R' ayant la même définition que R⁶, telle qu'énoncée ci-dessus,
- au moins une partie des radicaux R⁶ pouvant éventuellement correspondre à Y, et
- au moins deux groupements Y sont présents dans la structure du polyorganosiloxane **A₁**.
• le composé (organo)silicié **B** étant un silane de formule générale **(B)** suivante :
R⁷₄₋ₐ Si Y'ₐ **(B)**
dans laquelle:
- R⁷ étant identiques ou différents entre eux et correspondant à l'hydrogène ou à des groupements hydrocarbonés en C₁-C₁₂,
- Y' représente des groupes -OR', identiques ou différents, avec R' ayant la même définition que R⁷, telle qu'énoncée ci-dessus et peut correspondre en outre à des groupements hydrocarbonés en C₁-C₂₀ comprenant éventuellement un ou plusieurs hétéroatomes, et en particulier comportant :
- un reste oxime de formule :
(R⁸)₂C=N-O-
avec R⁸ représentant indépendamment, un alkyle linéaire ou ramifié en C₁ à C₈ un cycloalkyle en C₃ à C₈, un alcényle en C₂-C₈,
- un reste alcoxy de formule :
OR⁹(CH₂CH₂O)_{b} -
avec R⁹ représentant indépendamment, un alkyle linéaire ou ramifié en C₁ à C₈ un cycloalkyle en C₃ à C₈ et b = 0 ou 1 ;
- un reste acyle de formule : 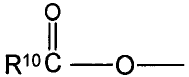 avec R¹⁰ représentant un radical monovalent hydrocarboné saturé ou non en C₁ à C₁₃, ramifié ou non, substitué ou non substitué, aliphatique, cyclanique ou aromatique, ou
- un reste énoxy de formule :
R¹¹R¹¹C=CR¹¹-O-
avec les R¹¹, identiques ou différents, représentant un hydrogène ou un radical monovalent hydrocarboné saturé ou non en C₁ à C₁₃, ramifié ou non, substitué ou non substitué, aliphatique, cyclanique ou aromatique, et
- a est égal à 3 ou 4, et
• le composé (organo)silicié **D** étant une résine polyorganosiloxane fonctionnalisée par au moins un radical Y', tel que défini ci-dessus, présentant, dans sa structure, au moins deux motifs siloxyles différents choisis parmi ceux de formules (R¹²)₃SiO_{1/2} (motif M), (R¹²)₂SiO_{2/2} (motif D), R¹²SiO_{3/2} (motif T) et SiO_{4/2} (motif Q), l'un au moins de ces motifs étant un motif T ou Q, les radicaux R¹² identiques ou différents, représentent chacun un radical monovalent hydrocarboné saturé ou non en C₁ à C₁₃, substitué ou non substitué, aliphatique, cyclanique ou aromatique.

2. Utilisation selon la revendication 1 **caractérisée en ce que** le catalyseur **C:**
• est (sont) préparé(s) séparément, et/ou
• est (sont) généré(s) in-situ à partir d'au moins un précurseur.

3. Utilisation selon la revendication 2, **caractérisée en ce que** le (ou les) précurseur(s) est (sont) un sel(s) correspondant(s) au(x) carbène(s), qui est (sont) mis à réagir avec au moins une base, de manière à générer in-situ le catalyseur **C.**

4. Utilisation selon la revendication 3, **caractérisée en ce que** le (ou les) sel(s) correspondant(s) est (sont) un (ou des) sel(s) hétérocyclique(s) correspondant(s) de formules générales (**III**) ou **(III')** : 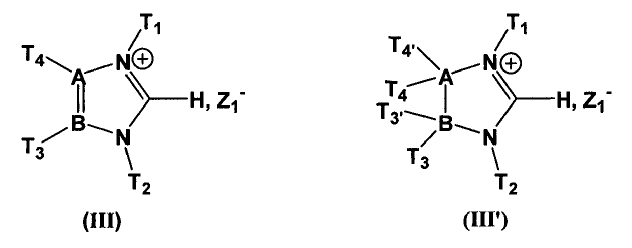 dans lesquelles :
- A, B, T1, T2, T3, T_{3'}, T4 et T4' sont tels que définis dans la revendication 6 ;
- Z1 représente indépendamment un anion dérivé d'un acide de Brönsted (acide protique).

5. Utilisation selon l'une quelconque des revendications précédentes, **caractérisée en ce qu'**il est mis en oeuvre, en catalyse homogène, dans un milieu réactionnel liquide dans lequel sont au moins partiellement solubilisés le catalyseur **C** et/ou son (ou ses) précurseur(s) et le(s)dit(s) composé(s) organosilicié(s) de départ, et éventuellement au moins une base.

6. Utilisation selon l'une quelconque des revendications précédentes, **caractérisée en ce que** l'on contrôle la solubilité du catalyseur **C** et/ou de son (ou ses) précurseur(s), à l'aide d'au moins un auxiliaire de solubilisation et/ou en utilisant un (ou des) carbène(s) substitué(s) par au moins un groupement approprié.

7. Utilisation selon l'une quelconque des revendications précédentes, **caractérisée en ce qu'**il est essentiellement réalisé à une température T (°C) telle que T ≤ 200.

8. Utilisation dans un procédé de condensation tel que défini dans la revendication 1 d'une composition silicone réticulable, éventuellement en présence d'eau, **caractérisée en ce qu'**elle comprend :
- au moins un composé (organo)silicié **A₁** et **(B** et/ou **D)** tel que définis selon la revendication 1 et
- au moins un catalyseur **C** tel que défini selon l'une quelconque des revendications 1 à 4.

9. Utilisation d'une composition selon la revendication 8:
- pour la réalisation de revêtements, notamment antiadhérent, de supports solides, de nature variée, avantageusement en pierre, béton, métal, bois, verre, céramique, papier, carton; - pour l'enduction de matériau fibreux tissés ou non,
- à titre de liant, notamment hydrofuge, pour matériaux composites fibreux ou non, lesdites éventuelles fibres étant minérales ou non, ou
- à titre de mastic ou de matériau d'étanchéification.

## Patentansprüche

1. Verwendung mindestens eines Katalysators C, bei dem es sich um ein Carben der Formel (**II**) oder (**II'**) handelt: 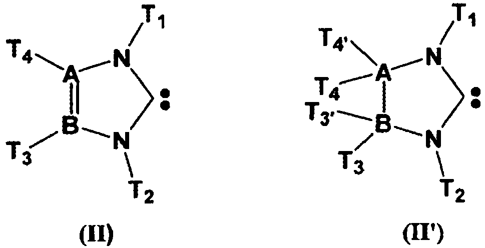 worin:
- die Symbole A und B unabhängig für C oder N stehen, mit den Maßgaben, dass:
• in der Formel **(II)** dann, wenn A für N steht, T₄ nicht vorhanden ist, und dann, wenn B für N steht, T₃ nicht vorhanden ist; und
• in der Formel **(II')** dann, wenn A für N steht, T₄ oder T_{4'} nicht vorhanden ist, und dann, wenn B für N steht, T₃ oder T_{3'} nicht vorhanden ist;
- T₃, T_{3'}, T₄ und T_{4'} unabhängig für ein Wasserstoffatom, eine Alkylgruppe, eine Cycloalkylgruppe, die gegebenenfalls durch Alkyl oder Alkoxy substituiert ist, eine Arylgruppe, die gegebenenfalls durch Alkyl oder Alkoxy substituiert ist, eine Alkenylgruppe, eine Alkinylgruppe oder eine Arylalkylgruppe, in der der Arylteil gegebenenfalls durch Alkyl oder Alkoxy substituiert ist, stehen;
- T₃ und T₄ zusammen und mit A und B, wenn diese jeweils für ein Kohlenstoffatom stehen, ein Aryl bilden können, mit der Maßgabe, dass in diesem Fall T_{3'} und T_{4'} nicht vorhanden sind;
- T₁ und T₂ unabhängig für eine Alkylgruppe, eine Alkylgruppe, die gegebenenfalls durch Alkyl substituiert ist, eine Alkylgruppe, die perfluoriert oder gegebenenfalls durch eine Perfluoralkylgruppe substituiert ist, eine Cycloalkylgruppe, die gegebenenfalls durch Alkyl oder ⁅Alkoxy substituiert ist, eine Arylgruppe, die gegebenenfalls durch Alkyl oder Alkoxy substituiert ist, eine Alkenylgruppe, eine Alkinylgruppe oder eine Arylalkylgruppe, in der der Arylteil gegebenenfalls durch Alkyl oder Alkoxy substituiert ist, stehen; oder auch T₁ und T₂ unabhängig für einen einwertigen Rest der folgenden Formel (**V**) stehen:
**-V1-V2** (**V**)
worin:
• V1 für eine gesättigte oder ungesättigte zweiwertige Kohlenwasserstoffgruppe, vorzugsweise ein lineares oder verzweigtes C₁-C₁₀-Alkylen, das gegebenenfalls substituiert ist, steht und
• V2 für eine einwertige Gruppe steht, die aus der Gruppe bestehend aus den folgenden Substituenten ausgewählt ist:
◆ Alkoxy, -OR^{a}, wobei R^{a} Wasserstoff, Alkyl oder Aryl entspricht;
◆ Silyl, -Si(OR^{b})ₓ(R^{c})₃₋ₓ, wobei R^{b} Wasserstoff, Alkyl, Silyl oder Siloxanyl entspricht, R^{c} Alkyl oder Aryl entspricht und x eine ganze Zahl mit einem Wert zwischen 0 und 3 ist; und
◆ Amin; oder auch
- die Substituenten T₁, T₂, T₃, T_{3'}, T₄ und T_{4'} dann, wenn sie sich in den Formeln (II) und (II') an zwei benachbarten Spitzen befinden, paarweise eine gesättigte oder ungesättigte Kohlenwasserstoffkette bilden können,
zur Durchführung einer Kondensationsreaktion zwischen mindestens einer ≡SiOH-Einheit und mindestens einer ≡SiOR-Einheit, wobei R = Wasserstoff oder eine C₁-C₂₀-Kohlenwasserstoffgruppe, die gegebenenfalls ein oder mehrere Heteroatome umfasst, **dadurch gekennzeichnet, dass** die Kondensationsreaktion zwischen:
• mindestens einer (Organo)Siliciumverbindung **A₁** und mindestens einer (Organo)Siliciumverbindung **B**,
• mindestens einer (Organo)Siliciumverbindung **A₁** und mindestens einer (Organo)Siliciumverbindung **D,** und
• mindestens einer (Organo)Siliciumverbindung **A₁** und mindestens einer (Organo)Siliciumverbindung **B** und mindestens einer (Organo)Siliciumverbindung **D**
durchgeführt wird,
wobei:
• die (Organo)Siliciumverbindung **A₁** die Formel 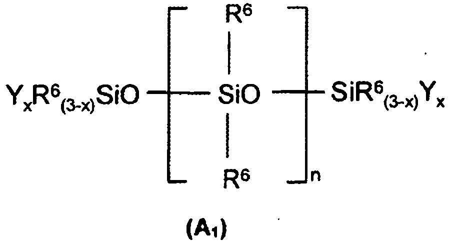 aufweist, wobei:
- x = 1, 2 oder 3;
- n eine ganze Zahl größer gleich 1 ist;
- die Reste R⁶ gleich oder voneinander verschieden sind und Wasserstoff oder C₁-C₂₀-Kohlenwasserstoffgruppen entsprechen,
- Y für gleiche oder verschiedene Gruppen -OR' steht, wobei R' die gleiche Definition wie R⁶ gemäß obigen Angaben hat,
- mindestens ein Teil der Reste R⁶ gegebenenfalls Y entsprechen kann und
- in der Struktur des Polyorganosiloxans **A₁** mindestens zwei Gruppen Y vorliegen;
• es sich bei der (Organo)Siliciumverbindung **B** um ein Silan der folgenden allgemeinen Formel (**B**) handelt:
R⁷₄₋ₐSiY'ₐ (**B**)
wobei:
- die Reste R⁷ gleich oder voneinander verschieden sind und Wasserstoff oder C₁-C₁₂-Kohlenwasserstoffgruppen entsprechen,
- Y' für gleiche oder verschiedene Gruppen -OR' steht, wobei R' die gleiche Definition wie R⁷ gemäß obigen Angaben hat und außerdem C₁-C₂₀-Kohlenwasserstoffgruppen entsprechen kann, die gegebenenfalls ein oder mehrere Heteroatome umfassen und insbesondere Folgendes umfassen:
- einen Oximrest der Formel:
(R⁸)₂C=N-O-
wobei die Reste R⁸ unabhängig für ein lineares oder verzweigtes C₁- bis C₈-Alkyl, ein C₃- bis C₈-Cycloalkyl oder ein C₂-C₈-Alkenyl stehen,
- einen Alkoxyrest der Formel:
OR⁹ (CH₂CH₂O)_{b}-
wobei R⁹ unabhängig für ein lineares oder verzweigtes C₁- bis C₈-Alkyl oder ein C₃- bis C₈-Cycloalkyl steht und b = 0 oder 1;
- einen Acylrest der Formel: 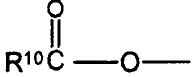 wobei R¹⁰ für einen aliphatischen, cyclanischen oder aromatischen, substituierten oder unsubstituierten, verzweigten oder unverzweigten, gesättigten oder ungesättigten einwertigen C₁- bis C₁₃-Kohlenwasserstoffrest steht, oder
- einen Enoxyrest der Formel:
R¹¹R¹¹C=CR¹¹-O-
wobei die Reste R¹¹ gleich oder verschieden sind und für Wasserstoff oder einen aliphatischen, cyclanischen oder aromatischen, substituierten oder unsubstituierten, verzweigten oder unverzweigten, gesättigten oder ungesättigten einwertigen C₁- bis C₁₃-Kohlenwasserstoffrest stehen, und
- a gleich 3 oder 4 ist, und
• es sich bei der(Organo)Siliciumverbindung D um ein Polyorganosiloxanharz handelt, das durch mindestens einen Rest Y' gemäß obiger Definition funktionalisiert ist und in seiner Struktur mindestens zwei verschiedene, aus Einheiten der Formeln (R¹²)₃SiO_{1/2} (M-Einheit), (R¹²)₂SiO_{2/2} (D-Einheit), R¹²SiO_{3/2} (T-Einheit) und SiO_{4/2} (Q-Einheit) ausgewählte Siloxyl-Einheiten aufweist, wobei es sich bei mindestens einer dieser Einheiten um eine T- oder Q-Einheit handelt, die Reste R¹² gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen.

2. Verwendung nach Anspruch 1, **dadurch gekennzeichnet, dass** der Katalysator C:
• separat hergestellt wird bzw. werden und/oder
• aus mindestens einer Vorstufe in situ erzeugt wird bzw. werden.

3. Verwendung nach Anspruch 2, **dadurch gekennzeichnet, dass** es sich bei der Vorstufe bzw. den Vorstufen um ein Salz bzw. Salze, das bzw. die dem Carben bzw. den Carbenen entspricht bzw. entsprechen, das bzw. die zur Erzeugung des Katalysators C in situ mit mindestens einer Base umgesetzt wird bzw. werden, handelt.

4. Verwendung nach Anspruch 3, dadurch µgekennzeichnet, dass es sich bei dem entsprechenden Salz bzw. den entsprechenden Salzen um ein entsprechendes heterocyclisches Salz bzw. entsprechende heterocyclische Salze der allgemeinen Formeln (**III**) oder (**III'**) handelt: 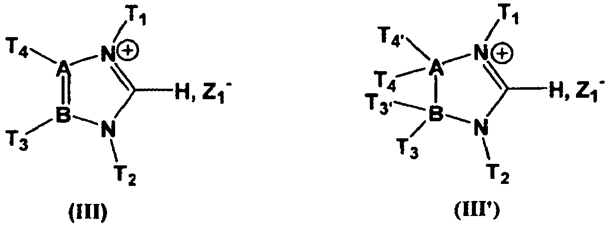 worin:
- A, B, T₁, T₂, T₃, T_{3'}, T₄ und T_{4'} wie in Anspruch 6 definiert sind;
- Z₁ unabhängig für ein Anion, das sich von einer Brönsted-Säure (Protonensäure) ableitet, steht.

5. Verwendung nach einem der vorhergehenden Ansprüche, **dadurch gekennzeichnet, dass** sie durch homogene Katalyse in einem flüssigen Reaktionsmedium, in dem der Katalysator **C** und/oder seine Vorstufe bzw. seine Vorstufen und die Organosilicium-Ausgangsverbindung bzw. die Organosilicium-Ausgangsverbindungen und gegebenenfalls mindestens eine Base zumindest teilweise gelöst sind, durchgeführt wird.

6. Verwendung nach einem der vorhergehenden Ansprüche, **dadurch gekennzeichnet, dass** die Löslichkeit des Katalysators **C** und/oder seiner Vorstufe bzw. seiner Vorstufen mit Hilfe mindestens eines Solubilisierunghilfsmittels und/oder durch Verwendung eines oder mehrerer Carbene, das bzw. die durch mindestens eine entsprechende Gruppe substituiert ist bzw. sind, gesteuert wird.

7. Verwendung nach einem der vorhergehenden Ansprüche, **dadurch gekennzeichnet, dass** sie im Wesentlichen bei einer solchen Temperatur T (°C) durchgeführt wird, dass T ≤ 200.

8. Verwendung einer gegebenenfalls in Gegenwart von Wasser vernetzbaren Silikonzusammensetzung bei einem Kondensationsverfahren gemäß Anspruch 1, **dadurch gekennzeichnet, dass** sie Folgendes umfasst:
- mindestens eine (Organo)Siliciumverbindung **A₁** und (**B** und/oder **D**) gemäß Anspruch 1 und
- mindestens einen Katalysator **C** gemäß einem der Ansprüche 1 bis 4.

9. Verwendung einer Zusammensetzung gemäß Anspruch 8:
- zur Herstellung von Beschichtungen, insbesondere Antihaftbeschichtungen, festen Trägern verschiedenartiger Beschaffenheit, vorteilhafterweise aus Stein, Beton, Metall, Holz, Glas, Keramik, Papier oder Pappe;
- zur Beschichtung von gewebten oder nicht gewebten Faserstoffen,
- als Bindemittel, insbesondere wasserabweisendes Bindemittel, für faserförmige oder nicht faserförmige Verbundwerkstoffe, wobei die fakultativen Fasern anorganisch oder organisch sind, oder
- als Kitt oder Abdichtungsmaterial.

## Claims

1. Use of at least one catalyst **C** which is a carbene of formula (**II**) or (**II'**): 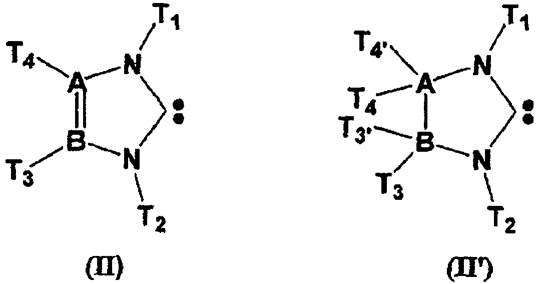 in which:
- A and B independently represent C or N, it being understood that:
• in the formula (II), when A represents N, then T₄ is not present and, when B represents N, then T₃ is not present;
• in the formula (II'), when A represents N, then T₄ or T_{4'} is not present and, when B represents N, then T₃ or T_{3'} is not present;
- T₃, T_{3'}, T₄ and T_{4'} independently represent a hydrogen atom; an alkyl group; a cycloalkyl group optionally substituted by an alkyl or alkoxy group; an aryl group optionally substituted by an alkyl or alkoxy group; an alkenyl group; an alkynyl group; or an arylalkyl group in which the aryl part is optionally substituted by an alkyl or alkoxy group; or else
- T₃ and T₄ can form, together and with A and B when the latter each represent a carbon atom, an aryl, it being understood that, in this case, T_{3'} and T_{4'} are not present;
- T₁ and T₂ independently represent an alkyl group; an alkyl group optionally substituted by an alkyl group; a perfluorinated alkyl group or an alkyl group optionally substituted by a perfluoroalkyl group; a cycloalkyl group optionally substituted by an alkyl or alkoxy group; an aryl group optionally substituted by an alkyl or alkoxy group; an alkenyl group; an alkynyl group; or an arylalkyl group in which the aryl part is optionally substituted by an alkyl or alkoxy group; or else
- T₁ and T₂ independently represent a monovalent radical of following formula (**V**):
**-V1-V2** **(V)**
in which:
• V1 is a saturated or unsaturated divalent hydrocarbon group, preferably a linear or branched C₁-C₁₀ alkylene, which is optionally substituted,
• V2 is a monovalent group chosen from the group of the following substituents:
◆ alkoxy, -OR^{a} with R^{a} corresponding to hydrogen, alkyl or aryl;
◆ silyl, -Si (OR^{b}) x (R^{c}) ₃₋ₓ with R^{b} corresponding to hydrogen, alkyl, silyl or siloxanyl, R^{c} corresponding to alkyl or aryl and x being an integer between 0 and 3;
◆ amine, or alternatively;
- the T₁, T₂, T₃, T_{3'}, T₄ and T_{4'} substituents can form, in pairs, when they are situated on two adjacent vertices in the formulae (**II**) and (**II**'), a saturated or unsaturated hydrocarbon chain,
for carrying out a condensation reaction between at least one ≡SiOH unit and at least one ≡SiOR unit with R = a hydrogen or a C₁-C₂₀ hydrocarbon group optionally comprising one or more heteroatoms, **characterized in that** the condensation reaction is carried out between:
• at least one (organo)silicon compound **A₁** and at least one (organo)silicon compound **B**,
• at least one (organo)silicon compound **A₁** and at least one (organo)silicon compound **D**, and
• at least one (organo)silicon compound **A₁** and at least one (organo)silicon compound **B** and at least one (organo)silicon compound **D**,
with:
• the (organo)silicon compound **A₁** of formula: 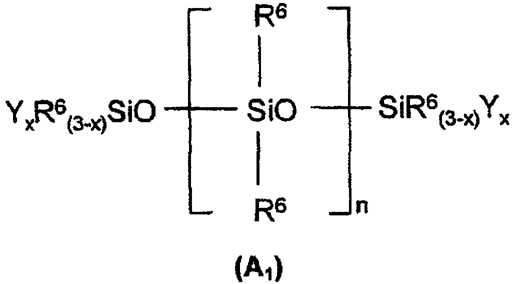 with:
- x = 1, 2 or 3;
- n being an integer greater than or equal to 1;
- the R⁶ radicals being identical to or different from one another and corresponding to hydrogen or to C₁-C₂₀ hydrocarbon groups;
- Y representing identical or different -OR' groups with R' having the same definition as R⁶, as stated above;
- it being possible for at least a portion of the R⁶ radicals optionally to correspond to Y, and
- at least two Y groups being present in the structure of the polyorganosiloxane **A₁;**
• the (organo)silicon compound **B** being a silane of following general formula (**B**):
R⁷₄₋ₐSiY'ₐ (**B**)
in which:
- R⁷ are identical to or different from one another and correspond to hydrogen or to C₁-C₁₂ hydrocarbon groups;
- Y' represents identical or different -OR' groups with R' having the same definition as R⁷, as stated above, and being able to additionally correspond to C₁-C₂₀ hydrocarbon groups optionally comprising one or more heteroatoms and in particular comprising:
- an oxime residue of formula:
(R⁸)₂C=N-O-
with R⁸ independently representing a linear or branched C₁ to C₈ alkyl, a C₃ to C₈ cycloalkyl or a C₂-C₈ alkenyl,
- an alkoxy residue of formula:
R⁹0 (CH₂CH₂O)_{b}-
with R⁹ independently representing a linear or branched C₁ to C₈ alkyl or a C₃ to C₈ cycloalkyl and b = 0 or 1;
- an acyl residue of formula: 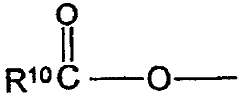 with R¹⁰ representing a saturated or unsaturated, substituted or unsubstituted, branched or unbranched, aliphatic, cyclanic or aromatic, monovalent C₁ to C₁₃ hydrocarbon radical, or
- an enoxy residue of formula:
R¹¹R¹¹C=CR¹¹-O-
with the R¹¹ groups, which are identical or different, representing a hydrogen or a saturated or unsaturated, substituted or unsubstituted, branched or unbranched, aliphatic, cyclanic or aromatic, monovalent C₁ to C₁₃ hydrocarbon radical, and
- a is equal to 3 or 4, and
• the (organo)silicon compound **D** being a polyorganosiloxane resin functionalized by at least one Y' radical as defined above, exhibiting, in its structure, at least two different siloxyl units chosen from those of formulae (R¹²)₃SiO_{1/2} (M unit), (R¹²)₂SiO_{2/2} (D unit), R¹²SiO_{3/2} (T unit) and SiO_{4/2} (Q unit), at least one of these units being a T or Q unit, the R¹² radicals, which are identical or different, each representing a saturated or unsaturated, substituted or unsubstituted, aliphatic, cyclanic or aromatic, monovalent C₁ to C₁₃ hydrocarbon radical.

2. Use according to Claim 1, **characterized in that** the catalyst **C:**
• is (are) prepared separately, and/or
• is (are) generated in situ from at least one precursor.

3. Use according to Claim 2, **characterized in that** the precursor(s) is (are) a salt(s) corresponding to the carbene(s) which is (are) reacted with at least one base so as to generate the catalyst C in situ.

4. Use according to Claim 3, **characterized in that** the corresponding salt(s) is (are) a corresponding heterocyclic salt(s) of general formula (**III**) or (**III'**) : 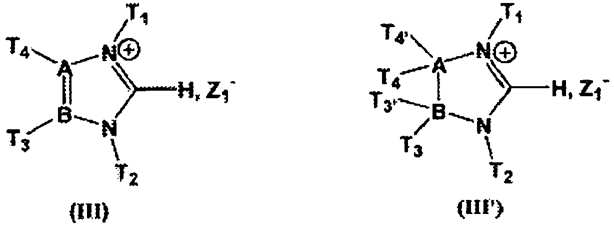 in which:
- A, B, T₁, T₂, T₃, T_{3'}, T₄ and T_{4'} are as defined in Claim 6;
- Z₁ independently represents an anion derived from a Brönsted acid (protic acid).

5. Use according to any one of the preceding claims, **characterized in that** it is carried out, by homogeneous catalysis, in a liquid reaction medium in which the catalyst **C** and/or its precursor(s) and the said starting organosilicon compound(s) and optionally at least one base are at least partially dissolved.

6. Use according to any one of the preceding claims, **characterized in that** the solubility of the catalyst **C** and/or of its precursor(s) is controlled using at least one solubilization aid and/or by using a carbene(s) substituted by at least one appropriate group.

7. Use according to any one of the preceding claims, **characterized in that** it is essentially carried out at a temperature T (°C) such that T ≤ 200.

8. Use in a condensation process as defined in Claim 1 of a silicone composition which can be crosslinked, optionally in the presence of water, **characterized in that** it comprises:
- at least one (organo)silicon compound **A₁** and (**B** and/or **D**) as defined according to Claim 1, and
- at least one catalyst **C** as defined according to any one of Claims 1 to 4.

9. Use of a composition according to Claim 8:
- in the preparation of coatings, in particular release coatings, for solid supports of varied nature, advantageously of stone, concrete, metal, wood, glass, ceramic, paper or board;
- in the coating of woven or nonwoven fibrous materials,
- as binder, in particular water-repellent binder, for fibrous or nonfibrous composite materials, said optional fibres being inorganic or organic, or
- as mastic or leakproofing material.
